# EUROPEAN PATENT SPECIFICATION

(11) **EP 1 593 917 B1**
(45) Date of publication and mention of the grant of the patent: **02.11.2011**
(21) Application number: 05445024.2
(22) Date of filing: 27.04.2005
(51) Int. Cl.: F24H 9/12, F16L 41/00, F16L 15/00

(54) **Method for establishing a pipe sleeve connection in a water heater steel storage tank**
Herstellungsverfahren einer Rohrmuffenverbindung in einem Stahlbehälter eines Wassererhitzers
Procédé de fabrication d'un raccord à manchon de tuyau dans un réservoir en acier d'un chauffe-eau

(30) Priority: 05.05.2004 NO 20041923
(43) Date of publication of application: 09.11.2005
(73) Proprietor: OSO Hotwater AS, 3300 Hokksund (NO)
(72) Inventor: Braathen, Chris R., 0759 Oslo (NO)
(74) Representative: Tofting, Arild

(56) References cited:
- DE-A1- 2 512 016
- US-A- 1 839 248
- US-A- 1 892 320
- US-A- 3 117 622

## Description

The present invention relates to a method for establishing a secure pipe sleeve connection to a water heater steel storage tank.

Such storage tanks normally are manufactured of stainless steel with two cupola like parts, one at the top and one at the bottom, together with a cylindrical part having a circular cross section there between, possibly only with two cupola like parts. The parts of the tank are welded to each other.

Connecting pipes for water inlet and water outlet are connected to and penetrate the steel tank. In this connection normally sockets or sleeves are used which are welded to the tank and being provided with internal or external threads for connection of pipes or valves. Additionally the tank comprises other connections such as a safety valve, at least one immersion heater, an internal heat exchanger etc.

DE 2512016 A1 describes a method for establishing a secure pipe sleeve connection in a water heater metal tank which is according to the preamble of the subsequent claim 1. The method involves welding of a straight pipe portion to the tank wall.

US 1839248 describes a water heater tank with a straight pipe portion extending outwardly from the tank. The pipe portion has internal threads and is connected to a pipe.

Welding as such is an expensive process which also makes large demands on the performance of the welding processes and the welding metallurgy. The extreme heating during the welding process creates oxide scale and additional oxidation which lower the resistance against corrosion and which also is negative in relation to the lifetime of the water heater.

For the rest the welding process has to be performed from the inside of the tank to avoid crevice corrosion. All together welding also constitutes a labour intensive process which to a large extent includes possibilities for faults by deviations from the defined parameters during the welding process. This again makes the process expensive.

Manufacturing of threads in the tank material by means of cutting tools is precluded due to the small thickness of the material in the steel tank. The solution therefore was to secure a pipe sleeve having interior threads to the tank material by welding.

With the method and the pipe sleeve connection according to the present invention the above disadvantages by prior art are avoided. This is achieved with the method and the resulting pipe sleeve connection according to the invention as defined by the features stated in the claims. More specifically, the method prescribes to press a straight pipe portion of the the claims. More specifically, the method prescribes to press a straight pipe portion of the material of the tank wall into the interior of the tank or outwardly to the exterior of the tank, to model internal threads in the straight pipe portion by thread rolling said threads, and to screw into the straight pipe portion a pipe sleeve having corresponding external threads.

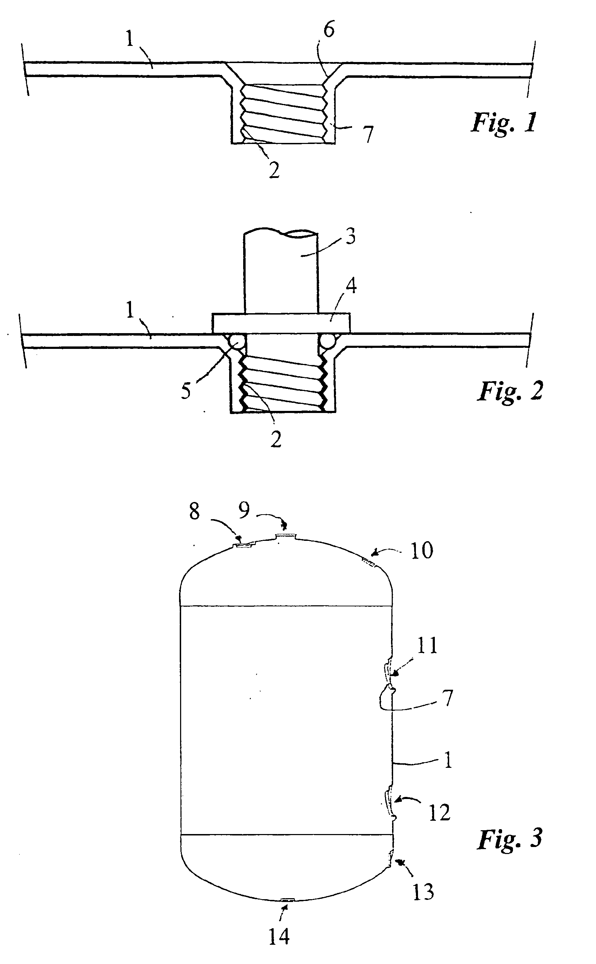

The drawing discloses in figure 1 schematically a prepared thread connection in the steel tank in a section, figure 2 discloses the connection in figure 1 upon connection of a pipe fitting, and figure 3 discloses schematically a vertical section through a water heater storage tank.

Figure 1 discloses a segment of a water heater steel tank from which a straight pipe portion 7 has been pressed into the inside of a tank 1 or outwardly to the exterior of the tank 1, depending on the need for the connecting part.

Simultaneously with the pressing and shaping of the straight portion 7 from the tank material it is preferred to form a contact face 6 between the straight portion 7 and the tank wall or the top or bottom cupola. The contact face 6 may be conical or have other suitable shape to receive an O-ring and possibly other sealing means. Interior threads 2 thereafter are modelled in the straight pipe portion (7) by thread rolling, which means that the basic material of the straight portion 7 is transformed to be internal threads. This operation may be accomplished without removing any material from the tank 1.

A pipe sleeve 3 is modelled in a corresponding way to be provided with outer threads and comprises a plan flange 4. An O-ring is fit on to the threaded portion of the pipe 3 against the flange 4, where after the pipe 3 is screwed on to the straight portion 7 to be secured in the threads in such a way that the O-ring is pretensioned between the flange 4, the pipe 3 and the face 6 with a pressure to withstand at least the testing pressure for the water heater tank, substantially higher as the operation pressure for which the water heater is manufactured. Rolling threads may be produced with high precision for pipe sleeves between ½" and 2" pipe threads.

To secure sealing of the connection, liquid thread dope or thread locking substance may be used in addition to the O-ring.

Figure 3 discloses connections 8, 10, 11, 12, 13 and 14 with the straight portion 7 extending inwardly into the tank 1, whereas the straight portion 7 of the connection 9 extends outwardly. Connections 11 and 12 are directed in an inclined angle such as for a heater element, which connection comprises a portion of the tank wall being pressed to be flat and at an acute angle to the horizontal plane. Upon provision of a flat inclined surface a straight portion 7 is shaped as described above.

## Claims

1. Method for establishing a secure pipe sleeve connection in a water heater steel tank (1), **characterized by** pressing a straight pipe portion (7) of the material of the tank wall into the interior of the tank (1) or outwardly to the exterior of the tank (1), by modelling internal threads (2) in the straight pipe portion (7) by thread rolling said threads (2), and by screwing into the straight pipe portion (7) a pipe sleeve (3) having corresponding external threads.

2. Method according to claim 1, **characterized by** fitting an O-ring in such a way on the pipe sleeve (3) that the O-ring is pretensioned between a flange (4) on the pipe sleeve (3) and a contact face (6) formed between the straight pipe portion (7) and the tank wall with a pressure twice the normal operating pressure of the water heater, in the case of the straight pipe portion (7) being pressed into the inside of the tank (1).

3. Method according to claim 1, **characterized by** forming a conical contact face (6) in the interior of the pipe sleeve connection at the transition of the straight pipe portion (7) to the material of the tank (1), in the case of the straight pipe portion (7) being pressed into the inside of the tank (1).

4. Method according to claim 3, **characterized by** fitting an O-ringin such a way on the pipe sleeve (3) that the O-ring is pre-tensioned between a flange (4) on the pipe sleeve (3) and the contact face (6) with a pressure twice the normal operating pressure of the water heater.

## Patentansprüche

1. Verfahren zur Errichtung einer sicheren Rohrmuffenverbindung in einem Wassererhitzerstahltank k (l), **gekennzeichnet durch** Pressen eines geraden Rohrabschnitts (7) des Materials der Tankwand in das Innere des Tanks (1) oder nach außen zum Äußeren des Tanks (1), **durch** Formen von Innengewinden (2) im geraden Rohrabschnitt (7) **durch** Gewindewalzen dieser Gewinde (2), und **durch** Schrauben einer Rohrmuffe (3) mit entsprechenden Außengewinden in den geraden Rohrabschnitt (7).

2. Verfahren nach Anspruch 1, **gekennzeichnet durch** Einpassen eines O-Rings derart auf die Rohrmuffe (3), dass der O-Ring zwischen einem Flansch (4) auf der Rohrmuffe (3) und einer Kontaktfläche (6), welche zwischen dem geraden Rohrabschnitt (7) und der Tankwand gebildet wird, mit einem Druck, welcher doppelt so groß ist wie der normale Arbeitsdruck des Wassererhitzers, für den Fall des ins Innere des Tanks (1) gepressten geraden Rohrabschnitts (7) vorgespannt wird.

3. Verfahren nach Anspruch 1, **gekennzeichnet durch** Bilden einer konischen Kontaktfläche (6) im Inneren der Rohrmuffenverbindung am Übergang vom geraden Rohrabschnitt (7) zum Material des Tanks (1) für den Fall des ins Innere des Tanks (1) gepressten geraden Rohrabschnitts (7).

4. Verfahren nach Anspruch 3, **gekennzeichnet durch** Einpassen eines O-Rings derart auf die Rohrmuffe (3), dass der O-Ring zwischen einem Flansch (4) an der Rohrmuffe (3) und der Kontaktfläche (6) mit einem Drucke welcher doppelt so groß ist wie der normale Arbeitsdruck des Nassererhitzers, vorgespannt wird.

## Revendications

1. Procédé de mise en place d'un raccord à manchon de tuyau solidetnent fixé dans un réservoir en acier (1) de chauffe-eau, **caractérisé par** l'introduction d'une partie de tuyau droite (7) du méme matériau que la paroi de réservoir dans l'intérieur du réservoir (1) ou apparemment vers l'extérieur du réservoir (1), en réalisant des filets internes (2) dans la partie de tuyau droite (7) grâce à un filetage par roulage desdits filets (2), et en vissant dans la partie de tuyau droite (2) un manchon de tuyau (3) présentant des filets externes correspondants.

2. Procédé selon la revendication 1, **caractérisé par** une adaptation d'un joint torique sur le manchon de tuyau (3) de telle sorte que le joint torique est contraint en pré-tension entre une bride (4) présente sur le manchon de tuyau (3) et une face de contact (6) formée entre la partie de tuyau droite (7) et la paroi de réservoir avec une pression double de la pression de fonctionnement normale du chauffe-eau, dans le cas où la partie de tuyau droite (3) est introduite à l'intérieur du réservoir (1).

3. Procédé selon la revendication 1, **caractérisé par** une formation d'une face de contact conique (6) à l'intérieur du raccord à manchon de tuyau au niveau de la transition de la partie de tuyau droite (7) vers le matériau du réservoir (1), dans le cas où la partie de tuyau droite (7) est introduite à l'intérieur du réservoir (1).

4. Procédé selon la revendication 3, **caractérisé par** un ajustement d'un joint torique sur le manchon de tuyau (3) de telle sorte que le joint torique est contraint en pré-tension entre une bride (4) présente sur le manchon de tuyau (3) et la face de contact (6) avec une pression double de la pression de fonctionnement normale du chauffe-eau.
